Europäisches Patentamt

European Patent Office

Office européen des brevets

(11) Publication number : **0 506 415 A2**

# EUROPEAN PATENT APPLICATION

(21) Application number : **92302653.8**

(51) Int. Cl.⁵ : **B30B 1/26**

(22) Date of filing : **26.03.92**

(30) Priority : **26.03.91 JP 87816/91**

(43) Date of publication of application :
**30.09.92 Bulletin 92/40**

(84) Designated Contracting States :
**DE GB IT**

(71) Applicant : **Aida Engineering Ltd.**
**2-10, Ohyama-cho**
**Sagamihara-shi, Kanagawa-ken (JP)**

(72) Inventor : **Shiga, Masakatsu**
**1005-3 Oyama-cho**
**Machida-shi, Tokyo (JP)**
Inventor : **Shimizu, Noriyuki**
**14-16 Minamihashimoto 1-chome**
**Sagamihara-shi, Kanagawa-ken (JP)**
Inventor : **Taniguchi, Naonori**
**6-1-11, Chuo**
**Sagamihara-shi, Kanagawa-ken (JP)**

(74) Representative : **Jackson, Peter Arthur**
**Gill Jennings & Every, 53-64 Chancery Lane**
**London WC2A 1HN (GB)**

(54) **Adjustable crank shaft assembly for a press machine.**

(57)    A device for adjusting eccentricity of a crank shaft for a press machine has a main portion (21) of the crank shaft rotatably supported by a frame ; an eccentric portion (23) having an axis eccentric from that of the main portion and arranged to be coupled to a connecting member (12) of the press machine, the main portion and the eccentric portion being capable of separating from each other in the axial direction of the crank shaft ; connecting means (48) provided where the main portion and the eccentric portion contact each other for connecting the main portion with variable eccentricity and drive means engaging and disengaging the connecting means.

EP 0 506 415 A2

A device for adjusting the eccentricity of a crank shaft in order to alter the slide stroke in a press machine is known. The conventional device of this kind employs an eccentric sleeve. A crank pin is utilized in the eccentric portion, offset from the axis of rotation of the crank shaft, to which pin the eccentric sleeve is rotatably coupled. One end portion of a connecting rod is rotatably coupled to the outer circumference of the eccentric sleeve. A fixing means for positioning the eccentric sleeve with reference to the crank pin is also provided.

In such structure, an adjustment in the eccentricity and slide stroke, can be achieved by controlling a relative angle of the eccentric sleeve to the crank pin. The position of the one end portion of the connecting rod eccentric from the rotating axis of the crank shaft can thus be altered.

Japanese Utility Model Application No. 63-6200 shows a device for adjusting eccentricity without rotating an eccentric sheave. In this device, the sheave does not rotate and an angular rotation is achieved by a reciprocal shift of a lock pin between the eccentric sheave and the eccentric portion of the crank shaft.

However, the above mentioned conventional eccentricity adjusting device, making use of the rotatable eccentric sleeve, results in deviation of both the eccentricity and the characteristics of the slide movement or crank motion. This is because when the eccentric sleeve rotates relatively to the crank pin, the one end portion of the connecting rod not only deviates from the axis of the crank shaft in the direction of eccentricity of the crank pin, but also in a direction at right angles thereto.

As mentioned above, when the crank motion undergoes changes, fine quality pressing cannot be relied upon.

Although the device of 63-6200 does not produce changes in the crank motion its adjustability is limited to a two-mode stroke, which is not useful.

It is generally known that if the crank shaft has a balance weight, an eccentricity adjustment in a press machine needs another adjustment to an eccentric connecting portion of the balance weight. However, no effective eccentricity adjusting device for the stroke of the balance weight has been proposed, so that an eccentricity adjusting device for the balance weight is desirable.

An object of the present invention is to provide an eccentricity adjusting device for the eccentric portion of the crank shaft in a press machine, which should not adversely influence the crank motion or the slide.

According to the present invention an adjustable crank shaft assembly for a press machine comprises a crank shaft with a main portion rotatably supported by a frame and an eccentric portion with an axis eccentric from that of the main portion and arranged to be coupled to a connecting member of the press machine, the main portion and the eccentric portion being capable of being separated from each other in the axial direction of the crank shaft; connecting means provided at engaging parts of the main portion and eccentric portion for connecting the main portion to the eccentric portion with an alterable eccentricity; and drive means for moving the main and eccentric portions axially relatively to one another for engaging and disengaging the connecting means.

When adjusting the eccentricity of the eccentric portion of the crank shaft, the connecting means is firstly released by means of the drive means and the eccentric and main portions of the crank shaft are moved apart. A slide or connecting rod connected to the eccentric portion may then be moved to alter the mutual positions of the main portion and the eccentric portion. Subsequently, the connecting means is operated by the drive means to bring the main portion and the eccentric portion of the crank shaft together again.

With this arrangement, if the connecting member is the connecting rod of a press slide, the eccentric portion may be shifted in the direction of eccentricity, so that no deviation in the crank motion of the slide is produced.

In the accompanying drawings:

Figure 1 is a sectional view showing one embodiment of adjusting device according to the invention;

Figure 2 is an exploded perspective view of part of Figure 1;

Figure 3 is a sectional view corresponding to Figure 1 but showing the parts during adjustment;

Figure 4 is a front diagrammatic view showing the general structure of a press machine employing the adjusting device of the present invention;

Figure 5 is a sectional view showing another embodiment of the present invention; and,

Figure 6 is an exploded perspective view of part of Figure 5.

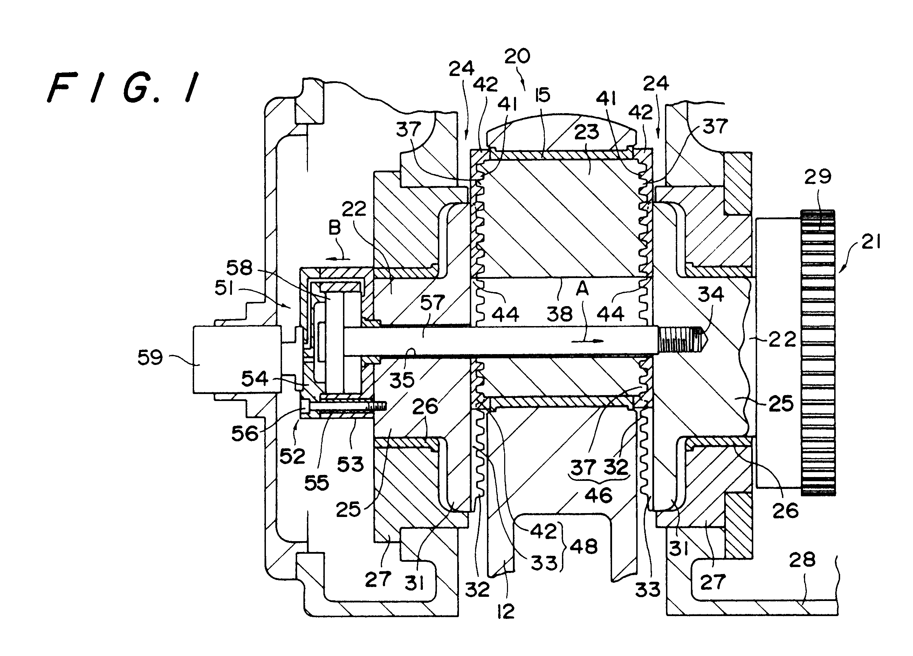

Figures 1 to 4 show the preferred embodiment of the present invention.

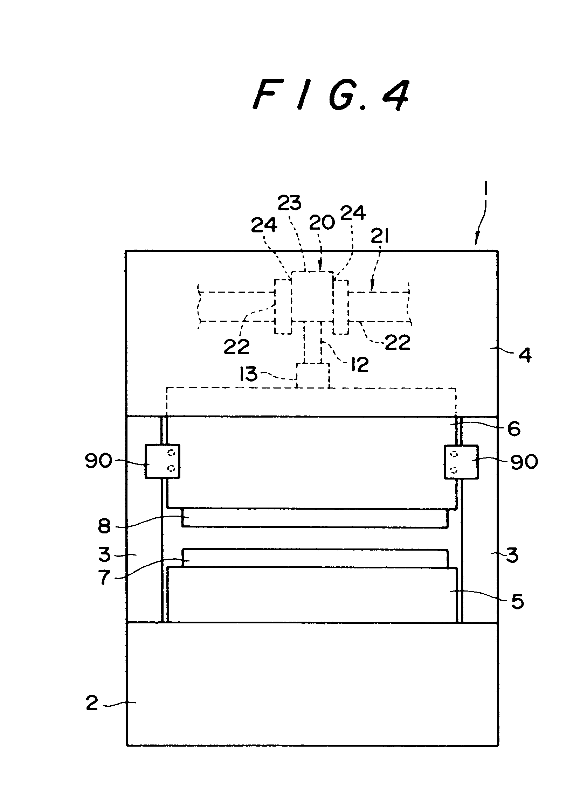

Figure 4 shows the whole structure of a press machine 1 which comprises a bed 2 and a crown 4 supported thereover via columns 3. The bed 2 has thereon a bolster 5 opposed to a slider 6 which is capable of reciprocal movement. On respective adjacent surfaces of the bolster 5 and slide 6, there are a lower die 7 and a corresponding upper die 8. Between the slide 6 and the columns 3, there is a slide fixing device 90.

The crown 4 has thereinside a crank shaft 21 provided with an eccentricity adjusting device 20. The crank shaft 21 is rotatably connected with one end portion of a connecting rod 12, forming a connecting member, via the adjusting device 20. The other end portion of the connecting rod 12 is connected with the slide 6 via a slide adjusting device 13 comprising a screw and corresponding nut. Accordingly, an adjustment of the device 13 can control the length of the effective connecting rod 12, so that a so-called die height can be set.

The eccentricity adjusting device 20 will be explained in detail in the following, but generally speaking with reference to Figure 4, an eccentric portion 23 can be separated from a main portion 22 of the crank shaft 21 along the axis of the crank shaft 21. The desirable adjustment in eccentricity can then be achieved by changing the engagement at a connecting portion 24 between the main portion 22 and the eccentric portion 23.

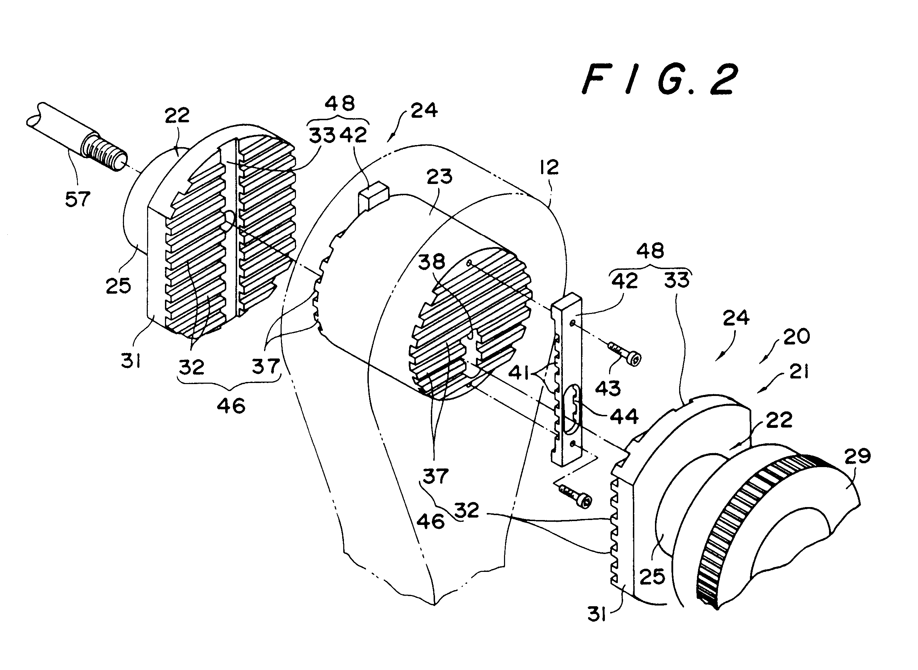

Figures 1 and 2 shows the adjusting structure 20 in detail. As shown, the crank shaft 21 has a main portion 22 divided into two parts, an axial portion 25 of each main portion part 22 is rotatably supported in a crown frame 28 by a metal bearing 26 and a bearing member 27 so that the crank shaft 21 rotates around the axis of the axial portion 25.

The bearing members 27 project from the frame so as to remain close to an end surface of the eccentric portion 33. Hence, when the eccentric portion 23 is separated from the main portion 22, the eccentric portion 23 can if necessary be supported against tilting in the axial direction, and can readily be re-engaged with the main portion.

The right side part 25 of the main portion 22, as shown in Figures 1 and 2, has a crank drive gear 29 to transmit power from a not-shown motor.

Each main portion part 22 is accompanied by a flange portion 31 of which both sides are cut out on a parallel to each other, but which is rotatable in a circular recess in the bearing member 27. The flange portion 31 has a plurality of trapezoidal teeth at a portion 32 on the whole of its one surface. The length of the teeth portion 32 extends perpendicularly to the axis of the crank shaft 21 and parallel to the eccentric direction of the eccentric portion 23. The teeth portion 32 is also provided with a centre key groove 33 on its surface at a certain depth and extending at right angles to the teeth. The main portion part 22 having the drive gear 29 is provided with a screw hole 34 at an eccentric portion, while, in the other main portion part 22, a through hole 35 is provided.

Between the pair of the main portion parts 22, i.e. between the teeth portions 32 on the two flange portions 31, there is the eccentric portion 23. The eccentric portion 23 is formed into a cylindrical shape and has teeth portions 37 on its respective surfaces, each teeth portion 37 being complementary to the teeth portion 32 of the respective main portion part 22 so as to mesh. The eccentric portion 23 has a through hole 38 of elongate cross section offset from its centre, corresponding to the screw hole 34 and the hole 35. The surface of the eccentric portion 23 holds on each of its teeth portions 37 a key 42 having a meshing teeth portion 41, by means of bolts 43. Each of these keys 42 has a long hole 44 in alignment with the hole 38 of the eccentric portion 23.

According to the above mentioned structure of the eccentric portion 23 and the main portion parts 22, the teeth portions 32 of the main portion parts 22 and the teeth portions 37 of the eccentric portions 23 can mesh with one another while the key grooves 33 and the keys 42 are mutually engaged. Engagement between the key 42 and the key grooves 33 exists even if meshing of the teeth portions 32 and 37 is released.

The teeth portions 32,37, which are mutually adjustable to vary the eccentricity of the portion 23, while enabling it to rotate together with the main portion 22, form connecting means 46. Under the released condition of the teeth portions 32 and 37 of the connecting device 46, the keys 42 and grooves 33 still guide the eccentric portion 23 in the eccentric direction relatively to the main portion 22, and form guide means 48.

The main portion part 22 not having the drive gear 29 is connected at the surface of its axial portion 25 with a cylinder 52 of a drive means 51 capable of engaging or disengaging the connecting means 46. The cylinder 52 comprises a case 53 of which one end is open, an end plate 54 corresponding to the opening of the case 53, some bushes, for example, three bushes 55 passing through the wall of the case 53, and three bolts 56 for fixing the end plate 54 to the main portion 22 through the bushes 55.

The cylinder 52 contains a piston 58 attached to one end of a reciprocatable drive shaft 57. The drive shaft 57 extends through the holes 35, 38 and 44 and is screwed at its other end into the hole 34 in the remote main portion part 22. When the piston 58 is moved in the cylinder 52, the main portion part 22 having the drive gear 29 is moved along the axis of rotation of the crank shaft 21, while the other main portion part 22 on the case 53 is moved in the opposite direction. Hence, it follows that the engagement or disengagement of the two teeth portions 32 and 37 is carried out by an operation of the cylinder 52. The end plate 54 of the cylinder 52 has a distributor 59 for the feeding of a pressurised fluid such as pressurised oil, into one, or the other, end of the cylinder.

Operation of the mentioned embodiment will be explained hereunder.

First of all, the crank shaft 21 should be stopped, when the slide 6 reaches its upper limit and with the eccentric portion 23 of the crank shaft 21 shifted to top dead centre. After the slide 6 has come to rest, the slide fixing device 90 locks up the slide 6 against the columns 3.

The drive means 51 for the connecting means 46 is so operated that the pair of the main portion parts 22 separate from the eccentric portion 23. This is effected by the oil fed into a space between the end plate 54 of the cylinder 52 and the piston 58 via the distributor 59 and a first passage through the centre of the end plate 54. The piston 58 is thus urged in the arrow A direction shown in Figure 1, while the case 53 fixed to the end plate 54 is moved in the arrow B direction. It follows that the main portion part 22 having the drive gear 29 is shifted in the A direction and the other main portion part 22 having the case 53 is urged in the B direction, so that the meshing between the teeth portions 32 and 37 of the main portion 22 and the eccentric portion 23 is released. However, the engagement between the keys 42 of the guide means 48 and the corresponding key grooves 33 remains.

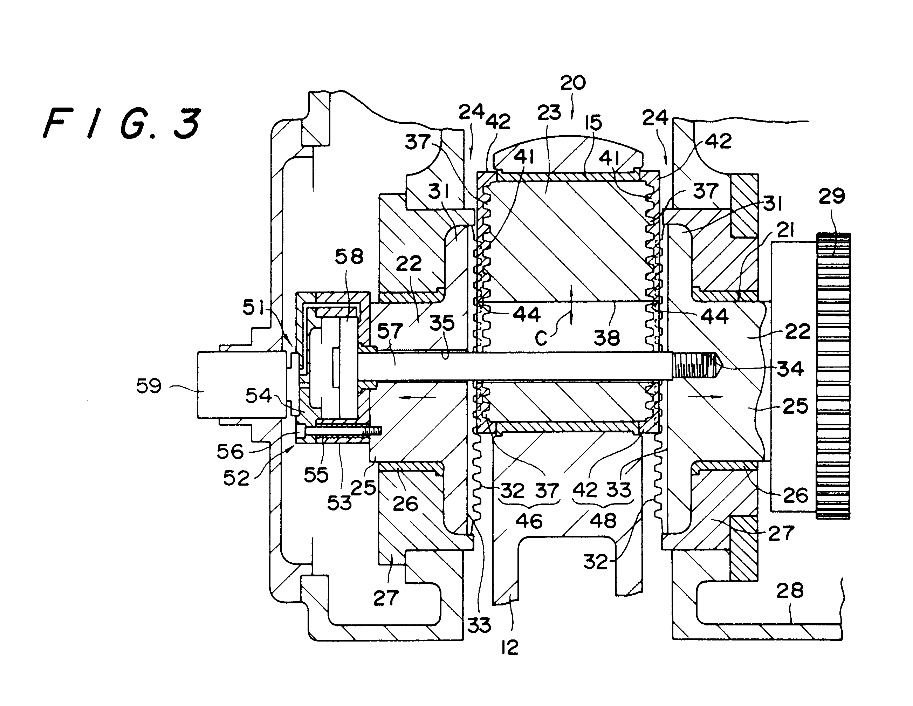

Figure 3 shows the state of the connecting means 46 disengaged after the pair of the main portion parts 22 have been shifted. As shown in Figure 3, the length of the connecting rod 12 is then adjusted by a predetermined length along the eccentric direction of the portion 23, i.e. in the arrow C direction by using the slide adjusting device 13. Next, the drive means 51 of the connecting means 46 is operated in the reverse direction. This can be done by a feeding of the pressurised oil into the space between the case 53 and piston 58 of the cylinder 52 via the distributor 59 and a second passage through the walls of the end plate 54 and of the case 53. The piston 58 is then reversed, so that the drive shaft 57 pulls the main portion part 22 having the gear 29 toward the eccentric portion 23 and the case 53 pushes the other main portion part 22 toward the portion 23. Hence, the remeshing of the teeth portions 32 and 37 of the main portion 22 and the eccentric portion 23 is done, enabling rotation of the portions 22 and 23 together.

In this way, the eccentricity adjustment of the eccentric portion 23 of the crank shaft 21 can be performed. However, the die-height of the press machine will have been changed. It is therefore necessary to adjust the slide adjusting device 13 to obtain a desirable die-height after reengaging the connecting means 46 and releasing the slide fixing device 90.

The above mentioned embodiment has the following features.

Since the eccentric portion 23 is so structured as to be separated from the main portion 22 of the crank shaft 21 and to be shifted in the eccentric direction of the portion 23, the adjustment of the eccentricity, and of the slide stroke can be done without deviations of the crank motion, which is different from that achieved by the conventional eccentric sleeve.

The adjustment of the slide stroke can be easily operated by the drive means 51 for the connecting means 46 and the slide adjusting device 13. The connecting means 46 employs the teeth portions 32 and 37 which are available to adjust fully the eccentricity of the portion 23 relatively to the main portion 22, so that a fine adjustment of the eccentricity and of the slide stroke can be expected. The tightness of the connecting means 46 is great because of the many teeth of the portions 32, 37.

Since the main portion 22 and the eccentric portion 23 are guided by the keys 42 and the key grooves 33 of the guide means 48 in the eccentric direction, when the engagement of the connecting means 46 is released, any other directional deviations will be prevented, so that reengagement of the teeth portions 32, 37 of the connecting means 46 can be done smoothly.

The centre axis of the drive means 51, or the drive shaft 57 is eccentric from the axis of rotation of the crank shaft 21. The length of the holes 38 and 44 in the eccentric portion 23 and the keys 42 are not necessarily made big in order to obtain significant variation in eccentricity of the portion 23.

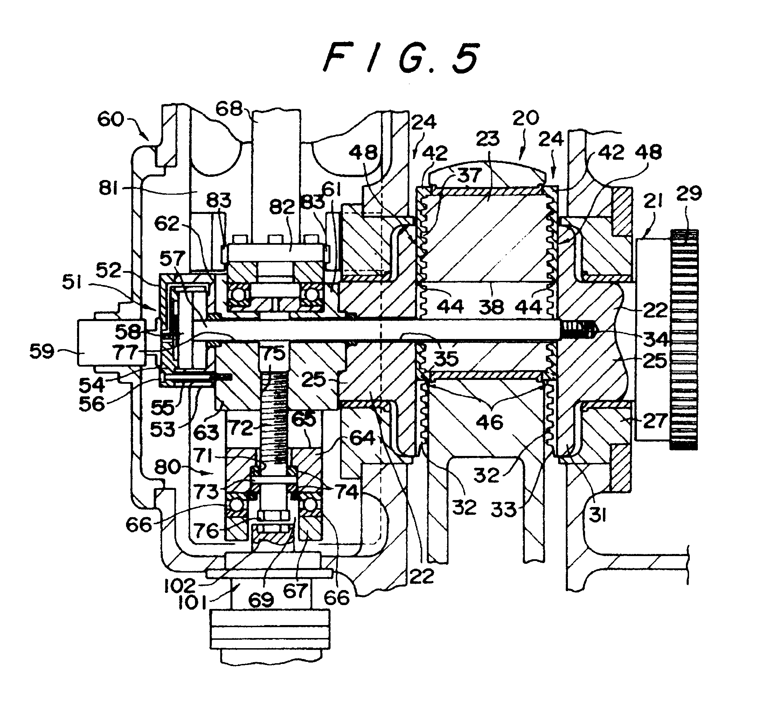

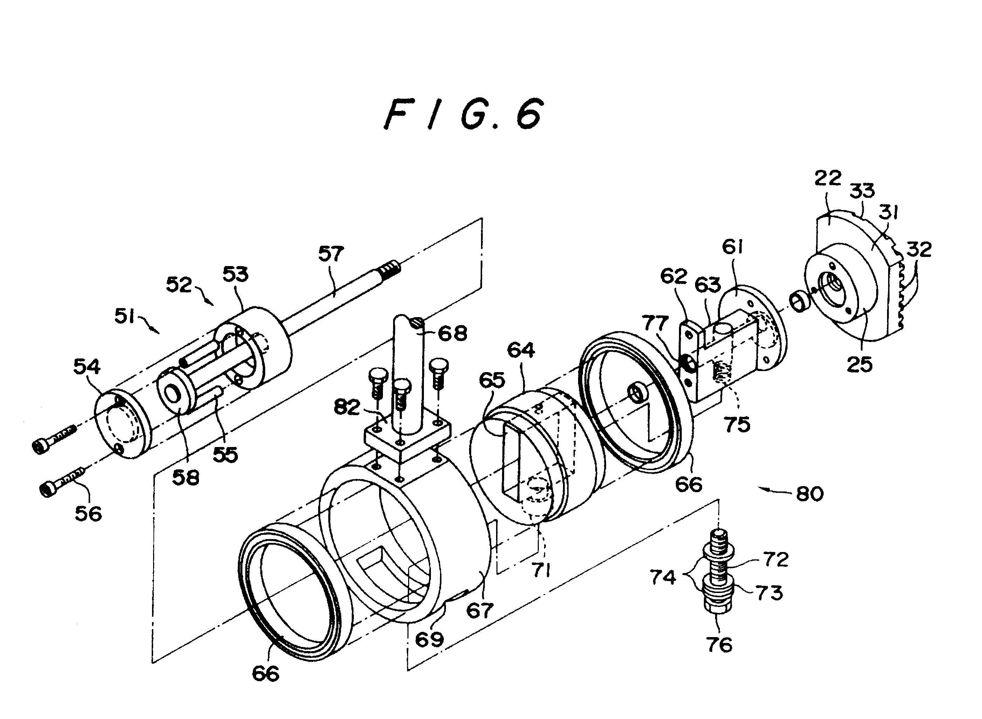

Figures 5, 6 show a developed embodiment. This embodiment further employs a balance device 60 for balancing the weight of the slide 6. In the following, explanations for the same or similar structure as that of the previously mentioned embodiment will be omitted or explained simply with the same reference numerals.

As shown in Figures 5 and 6, the main portion part 22 not having the drive gear 29 is associated with a guide element 63 with a rectangular block like body, a flange portion 61 at one end fixed by three screws to the portion 25 of the adjacent main portion part 22, and a square projecting portion 62 at the other end. The body of the guide element 63 extends through a rectangular hole 65 of a moving element 64 and the projecting portion 62 overlaps the end of the element 64. The larger dimension of the hole 65 is greater than that of the body of the guide element 63, so that the moving element 64 can be shifted relatively to the guide element 63 in the direction of eccentricity of the eccentric portion 23 of the crank shaft 21. However the length of the element 64 equals the spacing between the projecting portion 62 and flange portion 61, so that the two parts are constrained to move axially together.

The moving element 64 is accommodated rotatably inside a sleeve member 67 via two ball-bearings 66, the outer races of which are slidable in the sleeve member to a small axial extent. The sleeve member 67 has thereon a flange 82 for connection with an end of a connecting rod 68 for a balance weight. In this way, the element 64 forms another eccentric portion of the shaft.

At a side of the sleeve member 67 opposite to a where the connecting rod 68 is fitted, there is a cut out portion 69. At a position of the moving element 64 corresponding to the cut out portion 69, a through hole 71 is provided, in which an adjusting screw 72 is captive by washers 73,74 in a state so as not to be movable axially but rotatable. The forward end portion of the adjusting screw 72 extends into the square hole 65 and screws into a screw hole 75 of the guide element 63. The rearward end portion 76 of the adjusting screw 72 is arranged to be connected with an adjusting screw driving device 101 mounted on the crown frame 28. The adjusting screw driving device 101 is so arranged as to reciprocatably move toward and away from the portion 76 of the adjusting screw 72 and has a screwdriver portion 102 driven by a not-shown motor. Accordingly, by advancing the screwdriver portion 102 to the adjusting screw 72 and driving the portion 102 along with the end portion 76, an amount of connection between the screw 72 and the guide element 63 is controlled, and hence also the eccentricity of the part 64.

The adjacent end surface of the guide element 63 is fixed to the case 53 of the drive means 51 by the screws 56, of which there are now only two.

The drive shaft 57, of which one end is fixed to the piston 58 in the cylinder 52, extends through the hole 77 of the guide element 63, the hole 35 of the main portion part 22 contacting with the guide element 63, and the holes 44, 38 of the key 42 and eccentric portion 23 in this order, and is screwed up to the hole 34 of the main portion part 22 having the drive gear 29. Consequently, when the drive means 51 is operated, the main portion part 22 permanently contacting with the guide element 63 and the main portion part 22 having the drive gear 29 both separate from the eccentric portion 23. As has been mentioned, the engagement between the main portion 22 and the eccentric portion 23 is thus released. This axial movement is accommodated by the bearings 66 sliding axially within the sleeve member 67, which is not movable axially of the crank shaft.

The other end portion of the connecting rod 68 is rotatably connected to a balance weight 81. The weight 81 is so provided as to move up and down along a not-shown guide bar fixed to the crown frame 28, to balance the moving slide 6. At both sides of the flange 82 of the connecting portion for the sleeve member 67, along the axis of the crank shaft 21, guides 83 extending from the balance weight 81 are contacted respectively, so that deviation of the connecting rod 68 along axis of the crank shaft 21 can be prevented.

A stroke adjusting device 80 of the balance device 60 is thus formed by the moving element 64 supported by the guide element 63, the adjusting screw 72 screwed into the moving element 64, the driving device 101 for the screw 72 and so on.

Operation of this embodiment will now be explained. An adjustment of the connecting rod 12 for the slide 6 is the same as in the prior embodiment.

When the stroke of the slide has been adjusted, and the portions 22,23 have been re-engaged the eccentricity adjusting device 80 of the balance device 60 is operated for appropriate balancing.

Thus, with the moving element 64 at top dead centre, so that the screw portion 76 is exposed in the cut out portion 69, the screwdriver portion 102 is advanced to the adjusting screw 72 and coupled with the portion 76 of the adjusting screw 72. Rotating the screwdriver portion 102 in a predetermined direction will serve to rotate the adjusting screw 72, to cause the eccentric adjustment of the moving element 64 relative to the guide element 63.

After the above-mentioned adjustment the driving device 101 and the screwdriver portion 102 are withdrawn from the portion 76 of the adjusting screw 72.

After such adjustment in the balance device 60 in dependence on the slide stroke, the standard operation of the press machine starts.

According to the above mentioned embodiment, an ill-balance involved in an adjustment of the slide stroke is easily cancelled by the eccentric value adjusting device 80 of the balance device 60.

The adjustment in the eccentricity adjusting device 80 of the balance device 60 is simply performed only by rotating the adjusting screw 72, of which the cost is low. Since the operation of the adjusting screw 72 is done automatically by the driving device 101, operation for users is convenient.

The embodiments in the present invention should not be limited in the mentioned embodiments. Other developments and modifications of the present invention may be included.

For instance, a structure of the eccentricity adjusting device 20 employed for the slide 6 may be applied to the device 80 of the balance device 60. However, the device 80 of the balance device 60 having the adjusting screw 72 is more inexpensive than the device 20 having the teeth portions 32, 37.

In the arrangement of the eccentricity adjusting device 20, the connecting means 46 does not necessarily have the teeth portions 32, 37. Such an arrangement as a plurality of pins and corresponding holes may be applicable. An arrangement of the guide means 48 of the eccentricity adjusting device 20 may be such that the key 42 is provided on the flange portion 31 of the main portion 22 and the corresponding key groove 33 is on the eccentric portion 23. The key 42 and key groove 33 are not restricted within the mentioned arrangements. Beyond this, other arrangements can be employed on condition that the mutual movement between the eccentric portion 23 and the main portion 22 are kept as mentioned before.

The drive means 51 for the connecting means 46 may be respectively provided for each main portion part 22. The engagement and release of the guide element 63 and the moving element 64 in the balance device 60 shown in Figures 5, 6 may be also conducted by two different drive devices. But from the economical and structural point of view the single drive device 51 is preferable.

The sleeve member 67 related with the moving element 64 of the balance device 60 via the bearings 66 is not necessarily to be connected with the balance weight 81 through the connecting rod 68 but connected therewith through another connecting member as taught in JP-A-60-23160.

## Claims

1. An adjustable crank shaft assembly for a press machine, the assembly comprising a crank shaft with a main portion (22) rotatably supported by a frame and an eccentric portion (23) with an axis eccentric from that of the main portion and arranged to be coupled to a connecting member (12) of the press machine, the main portion and the eccentric portion being capable of being separated from each other in the axial direction of the crank shaft; connecting means (46) provided at engaging parts of the main portion and eccentric portion for connecting the main portion to the eccentric portion with an alterable eccentricity; and drive means (51) for moving the main and eccentric portions axially relatively to one another for engaging and disengaging the connecting means.

2. An assembly according to claim 1, wherein the connecting means (46) consists of teeth portions (32,37) meshing with each other, and guide means (48) for maintaining alignment between the main portion and the eccentric portion during alteration of the eccentricity.

3. An assembly according to claim 2, wherein the guide means (48) consists of a key (42) provided on the main portion or eccentric portion and a complementary key groove (33) provided on the main portion or eccentric portion, respectively.

4. An assembly according to any one of the preceding claims, wherein the drive means (51) has a cylinder (52), a reciprocatable drive shaft (57) of which one end has a piston (58) movable inside the cylinder and of which the other end is fixed to the main portion (22) with the drive shaft passing through the eccentric portion (23), and means (59) for feeding a pressurised fluid to the cylinder for moving the piston relatively thereto.

5. An assembly according to claim 4, wherein the main portion (22) is formed in two parts between which the eccentric portion is disposed, the other end of the drive shaft (57) being fixed to the part remote from the cylinder, and the cylinder (52) being fixed to the nearer part.

6. An assembly according to claim 4 or claim 5, wherein the axis of the drive shaft (57) is offset from the axis of the crank shaft in the direction of eccentricity of the eccentric portion (23).

7. An assembly according to any one of the preceding claims, further comprising a balance device (60) between the connecting means and the drive means for adjusting unbalance of a slide connected in use to the connecting member (12).

8. An assembly according to claim 7, wherein the balance device consists of a balance weight (81) counterbalancing movement of the slide and a device (63,64) connected with the balance weight via a balance weight connecting member (68) for adjusting the stroke of the balance weight.

9. An assembly according to claim 8, wherein the balance weight adjusting device comprises a guide element (63), a moving element (64) associated with the guide element, an adjusting screw (72) engaging a hole (71) in the moving element, and a driving device (101) for the adjusting screw.

# F I G . I

EP 0 506 415 A2

F I G. 2

EP 0 506 415 A2

F I G. 3

EP 0 506 415 A2

# F I G. 4

FIG. 5

FIG.6